Europäisches Patentamt

European Patent Office

Office européen des brevets

(19)

(11) Veröffentlichungsnummer: **0 151 257 B1**

## EUROPÄISCHE PATENTSCHRIFT

(12)

(45) Veröffentlichungstag der Patentschrift: **10.07.91**

(51) Int. Cl.⁵: **G01S 17/88**, G01S 17/10

(21) Anmeldenummer: **84114892.7**

(22) Anmeldetag: **07.12.84**

(54) **Verfahren zur Erzeugung von Entfernungsbildern.**

(30) Priorität: **08.02.84 DE 3404396**

(43) Veröffentlichungstag der Anmeldung:
**14.08.85 Patentblatt 85/33**

(45) Bekanntmachung des Hinweises auf die
Patenterteilung:
**10.07.91 Patentblatt 91/28**

(84) Benannte Vertragsstaaten:
**DE FR GB IT NL**

(56) Entgegenhaltungen:
**GB-A- 1 262 416**
**US-A- 3 649 124**
**US-A- 3 689 156**
**US-A- 3 886 303**
**US-A- 4 023 175**

(73) Patentinhaber: **DORNIER GMBH**
**Postfach 1420**
**W-7990 Friedrichshafen 1(DE)**

(72) Erfinder: **Metzdorff, Walter, Dr.**
**Frühlingsweg 11**
**W-7990 Friedrichshafen 24(DE)**
Erfinder: **Eibert, Max, Dr.**
**Sommerweg 3**
**W-7990 Friedrichshafen 24(DE)**
Erfinder: **Lux, Peter, Dr.**
**Untere Seestrasse 120**
**W-7994 Langenargen(DE)**

(74) Vertreter: **Landsmann, Ralf, Dipl.-Ing.**
**Kleeweg 3**
**W-7990 Friedrichshafen 1(DE)**

**Beschreibung**

Die Erfindung betrifft drei Verfahren zur Erzeugung von Entfernungsbildern.

Ein Entfernungsbild ist eine Abbildung eines Objekts, deren Bildpunkte nicht wie bei einem normalen Bild den Helligkeiten oder Farben der Objektpunkte entsprechen, sondern den jeweiligen Entfernungen der entsprechenden Objektpunkte.

Bekannt sind Verfahren zum zweidimensionalen Vermessen von Entfernungsinformationen in Form eines Entfernungsbildes (P. Levi, Elektronik 12, 1983). Die bekannten Verfahren lassen sich in zwei Gruppen einteilen, die sich durch das physikalische Meßprinzip unterscheiden: In Laufzeitmessungen elektromagnetischer oder akustischer Wellen und in Triangulationsmethoden. Das erste Prinzip eignet sich für Meßbereiche von einem Meter bis unendlich und liefert Meßgenauigkeiten ≥ 1 mm, das zweite Prinzip wird aufgrund des Zusammenhangs von Meßbasis und Meßgenauigkeit hauptsächlich im Nahbereich ≤ 1 m eingesetzt.

Nachteilig an den bekannten Systemen mit Lauftzeitmessung ist, dass generell jeweils die Entfernung von einem Meßpunkt zum Sensor vermessen wird; ein Bild wird durch Strahlablenkung, beispielsweise mit rotierendem oder oszillierendem Spiegel gezeugt. Ein derartiges System ist mechanisch und optisch aufwendig und entsprechend teuer.

Systeme, die nach dem Triangulationsprinzip arbeiten, gestatten unter bestimmten Bedingungen ein gleichzeitiges Messen mehrerer Entfernungsbildpunkte. Nachteilig ist jedoch, dass die Informationen mehrdeutig sein können, dass die Bildauswertung dann aufwendig ist und dass der Meßbereich auf kurze Entfernungen beschränkt bleibt.

Aus der **US 3,649,124** ist eine Vorrichtung bekannt, die eine Reihe von kurzen Laserpulsen aussendet und das von einem Objekt reflektierte Licht aufnimmt. Dabei wird die Laufzeit registriert und so eine Information über den Abstand gewonnen. Die aus den verschiedenen Abstandsbereichen stammenden Einzelbilder werden kodiert (unterschiedlich eingefärbt) und auf einem Bildschirm dargestellt. Das dargestellte Bild ist ein "normales" Bild, dessen Bildpunkte den Helligkeiten der Objektpunkte entsprechen und kein Entfernungsbild, dessen Bildpunkte der jeweiligen Entfernung der Objektpunkte entsprechen.

Aus der **US-PS 4,023,175** ist eine Vorrichtung bekannt, die die Entfernungen zu bestimmten Objektpunkten über die Laufzeit ausgesandter Pulse berechnet und auf einem Bildschirm darstellt. Entfernungsbilder werden nicht erzeugt.

Aufgabe der Erfindung ist es, Verfahren zur Erzeugung von Entfernungsbildern anzugeben, mit denen schnell eindeutige Bilder aufgenommen werden können.

Diese Aufgabe wird erfindungsgemäß gelöst von den Verfahren der drei nebengeordneten Ansprüche. Die Meßverfahren sind dem Prinzip der Laufzeitmessung zuzuordnen. Allerdings wird die Information nicht wie bisher punktweise sequentiell vermessen, sondern für Bildpunkte, die in Art einer Bildmatrix angeordnet sind, parallel.

Eine Vorrichtung zur Durchführung der Erfindung besteht aus vier Baugruppen:
a) einer Vorrichtung zum Aussenden von kurzen Lichtimpulsen
b) einer Vorrichtung zum Empfangen der vom Objekt reflektierten Pulse
c) einer Steuereinheit und
d) einer Verarbeitungseinheit.

Die zur Beleuchtung des Objekts notwendigen Lichtpulse können von einem Pulslaser erzeugt werden. Möglich ist auch der Einsatz einer anderen Lichtquelle, z.B. einer Xenonlampe oder einer CW-Lichtquelle. Die Pulse werden dann durch einen schnellen elektrooptischen Verschluss (Kerr-Zelle, Pockels-Zelle) erzeugt. Der Lichtstrahl wird von einer Optik aufgeweitet, um ein grösseres Gesichtsfeld zu beleuchten. Die Grösse des Lichtflecks richtet sich nach der Anwendung: Bei einem Entfernungssensor an einer Bearbeitungsmaschine oder einem Roboter reicht eine Fläche von einigen cm²; bei einer Kamera zur Aufnahme von Luftbildern aus einem Flugkörper muss der beleuchtete Bereich einige 100 m² oder mehr umfassen. Nach dem Anwendungszweck richtet sich auch die Auswahl der Lichtwellenlänge. In einem abgedunkelten Bereich einer Bearbeitungsmaschine kann eine breitbandige Strahlenquelle verwendet werden; bei der Aufnahme von Luftbildern ist eine möglichst schmalbandige Lichtquelle - auch im IR oder im UV-Bereich - vorteilhaft. Störende Streulichter können dann durch Verwendung schmalbandiger Filter in der Aufnahmeeinheit beseitigt werden.

Die vom Objekt reflektierten Pulse können bei ausreichender Intensität direkt von einer Fernsehkamera aufgenommen werden. Bei lichtschwachen Objekten kann ein Bildverstärker zugeschaltet werden.

Vorteilhaft ist in der Empfangseinheit ein schneller Verschluss vorgesehen, der vorteilhaft elektrooptisch arbeitet. Der Verschluss wird über die Steuereinheit synchron mit dem Aussenden des Lichtpulses angesteuert. Der Verschluss kann zeitverzögert geöffnet und gesperrt werden. Entspricht die Zeitverzögerung der Lichtlaufzeit, die der Lichtpuls für Hin- und Rückweg von der Kamera zum beleuchteten Punkt braucht, so gelangt der ausgesandte Impuls während der Öffnungszeit des Verschlusses in die Kamera. Mit der Länge der Verschlusszeit lässt sich der Entfernungsbereich, innerhalb dessen die rückgestrahlte Energie gemessen wird, variieren. Je kürzer die Verschlussöffnungszeit, umso geringer der Entfernungsbereich, über den Informationen gesammelt werden. Öffnet man beispielsweise den Verschluss um 400 nsec gegenüber dem Laserpuls verzögert mit einer Öffnungszeit von 2 nsec, erhält man die Information über die beleuchteten Bildpunkte, die zwischen 60 m und 60,3 m vom Sensor entfernt sind, zweidimensional auf den Kameraträger abgebildet. Der Bildverstärker verstärkt das schwache reflektierte Signal und leitet es zur Verarbeitungseinheit weiter.

Als Bildaufnahmeeinheit kann auch ein Vidikon, ein Charge Coupled Device (CCD) oder ein Charge Injection Device (CID) verwendet werden.

Anstelle eines Verschlusses und eines gebräuchlichen Bildverstärkers kann eine Channel plate (micro channel plate) verwendet werden. Dem Öffnen eines Verschlusses entspricht dann das Hochfahren des Verstärkungsfaktors durch Anlegen einer Spannung. Möglich ist ebenso die Verwendung eines schnell schaltbaren Bildverstärkers.

Zur Bildaufnahme kann hinter der Optik auch ein schaltbares Diodenarray verwendet werden. Das Bild steht dann bereits als Matrix elektrisch codiert zur Weiterverarbeitung zur Verfügung. Ein Diodenarray eignet sich auch für Betriebsarten wie Aufintegrieren (Speichern) der Bildinformation.

Es werden nun Betriebsverfahren beschrieben, die alle auf einem Grundverfahren beruhen: Stets werden Einzelbilder eines bestimmten Entfernungsbereichs aufgenommen - die Steuerung öffnet und schliesst den Verschluss der Aufnahmeeinheit in festem zeitlichen Bezug zur Aussendung der Pulse - und die Einzelbilder werden dann in einer Verarbeitungseinheit zu einem Entfernungsbild vereinigt. Dies kann durch digitalisieren, codieren der gemessenen Entfernungen (beispielsweise als Graustufen) und abspeichern erfolgen. Während des Auslesens aus der Kamera können schwache Störsignale durch eine Schwellwertschaltung unterdrückt werden.

Beim ersten Verfahren werden Einzelbilder je eines relativ schmalen Entfernungsbereichs aufgenommen, die Bildpunkte jedes Einzelbildes erhalten einen bestimmten Grauwert (z.B. nahe Objekte hell und ferne Objekte dunkel) und alle Einzelbilder werden zu einem Gesamtbild vereinigt.

Will man ein gesamtes Entfernungsbild mit einer Ortsauflösung von 30 cm erhalten, so muss man eine Reihe von Beleuchtungspulsen, jeweils um Inkremente von 2 nsec verzögert, aufnehmen und die Bildinformation in der Verarbeitungseinheit kombinieren. Um beispielsweise Höhendifferenzen von insgesamt 76,8 m in Schritten von 30 cm vermessen zu können, sind insgesamt 256 Beleuchtungspulse nötig.

Beim zweiten Verfahren kann die Zahl der Beleuchtungspulse wesentlich erniedrigt werden: Von n Beleuchtungen auf ld n. Statt 256 Beleuchtungen wie im vorgehenden Beispiel sind es nun nurmehr 8. Damit ist eine Echtzeitverarbeitung realisierbar.

Statt getrennter Entfernungsbereiche werden die Verschlusszeiten der Empfangsvorrichtung jetzt durch Rechteckimpulse so gesteuert, dass die Entfernungen in Binärwerten codiert werden. Es werden nun überlappende Entfernungsbereiche aufgenommen. Beim ersten Bild z.B. alle Objekte in der ersten Hälfte des Entfernungsbereichs, beim zweiten Bild alle Objekte im ersten Viertel und im dritten Viertel, beim dritten Bild alle Objekte im ersten, dritten, fünften und siebten Achtel, beim vierten Bild alle Objekte im ersten, dritten, fünften, siebten, neunten, elften, dreizehnten und fünfzehnten Sechzehntel usw. bis zur gewünschten Auflösung. Vorteilhaft sind diese Bilder sofort digital erhältlich. Das heißt, jeder Bildpunkt wird durch eine Digitalzahl mit soviel Ziffern wie Aufnahmen gemacht wurden, dargestellt, was die Weiterverarbeitung stark vereinfacht. Befindet sich z.B. an einem Bildpunkt ein Objekt in der Entfernung zwischen 11/16 und 12/16, so wird der Bildpunkt durch die Zahl 0100 dargestellt:

0    Objekt nicht in der ersten Hälfte
1    Objekt im dritten Viertel
0    Objekt nicht in einem der ungeradzahligen Achtel
0    Objekt nicht in einem der ungeradzahligen Sechzehntel.

Die ständige Halbierung der Öffnungszeiten ist willkürlich gewählt, es sind ebenso andere Bruchteilbildungen möglich, doch liefert die Halbierung direkt Binärzahlen, die sich für die elektronische Weiterverarbeitung eignen.

Die Zahl der Einzelbilder richtet sich nach der gewünschten Auflösung und nach dem vertretbaren Aufwand oder nach der zur Verfügung stehenden Zeit.

Zur Ermittlung des letzten Bildes ist wegen der höchsten Frequenz auch der höchste apparative Aufwand notwendig. Es ist jedoch auch möglich, die gleiche Auflösung mit der halben Frequenz zu erreichen, wenn im letzten Schritt die gleiche Frequenz wie im vorletzten verwendet wird, jedoch die Ansteuertakte phasenverschoben werden. Die dann entstehenden Dualzahlen beschreiben die Entfernung des Objektpunktes ebenfalls eindeutig.

Bei einem weiteren Verfahren werden wie vorher beschrieben Einzelbilder unterschiedlicher Entfernungsbereiche aufgenommen. Allen Bildpunkten aller Einzelbilder wird die gleiche Helligkeit zugeordnet; dies kann z.B. durch Betreiben des Bildverstärkers in der Sättigung erreicht werden. Die Einzelbilder werden nun nacheinander auf ein Speicherarray eingelesen, wobei die Helligkeitswerte des neuesten Bildes zu denen der Vorbilder addiert werden. Ein naher Gegenstand, z.B. bei Luftaufnahmen ein Turm, wird dabei als sehr heller Lichtfleck abgebildet, da er auf sehr vielen Einzel-Entfernungsbildern zu finden ist.

Ein weiteres Verfahren kann dann angewandt werden, wenn Sensor und der zu vermessende Gegenstand eine translatorische Relativbewegung zueinander ausführen.

Dies ist beispielsweise der Fall, wenn Gegenstände auf einem bewegten Förderband vermessen werden sollen (ruhender Sensor -bewegtes Objekt) bzw. Objekte aus einem Fahrzeug oder Flugzeug aufgenommen werden (bewegter Sensor - ruhendes Objekt).

In diesem Fall kann das folgende Aufnahmeprinzip ausgenutzt werden: Der Sensor ist so justiert, dass sowohl die Beleuchtungsquelle als auch das Gesichtsfeld der Aufnahmekamera nach vorn oder schräg nach vorn gerichtet sind. Der Winkel gegenüber der senkrechten Blickrichtung bestimmt im wesentlichen den Aufnahmebereich und die Auflösung. Sendepuls und der elektrooptische Verschluss der Kamera sind nun so aufeinander synchronisiert, dass nur dann das Target der Kamera belichtet wird, wenn ein Objekt in der beleuchteten Fläche liegt, das sich näher als im Abstand R vor der Kamera befindet.

Reflexionen, die einer Entfernung r > R entsprechen, werden durch den bereits geschlossenen Verschluss blockiert. An den Reflexionsstellen, die gerade der Entfernung r = R entsprechen, entstehen Übergänge von hellen (belichteten) Stellen zu dunklen (unbelichteten) Bereichen. Diese Übergänge entsprechen dem Entfernungsmeßwert R. Bewegt sich das Objekt in die vorgegebene Richtung (oder die Kamera in die entsprechend entgegengesetzte Richtung), so werden die neuen Punkte vermessen. Bei Durchlauf des Objekts durch den Beleuchtungskegel können mit Kenntnis der Relativgeschwindigkeit alle beleuchteten Objektpunkte vermessen werden. Die entsprechenden Höhenwerte des Objekts lassen sich durch eine einfache geometrische Umformung berechnen.

Um den Einfluss von Streulicht zu reduzieren, kann der Verschluss so synchronisiert werden, dass nicht alles Licht, das einer Entfernung r < R entspricht, aufgenommen wird, sondern nur die reflektierte Strahlung, die einem Bereich R ≤ r ≤ R + Δr entspricht. Das Meßprinzip wird hierdurch nicht verändert.

Die Erfindung wird anhand von vier Figuren näher erläutert.

Es zeigen:
Figur 1
ein Blockschaltbild einer Vorrichtung zur Durchführung der Erfindung,
Figuren 2 und 3
Teilschritte von Auswerteverfahren,
Figur 4

ein weiteres Auswerteverfahren.

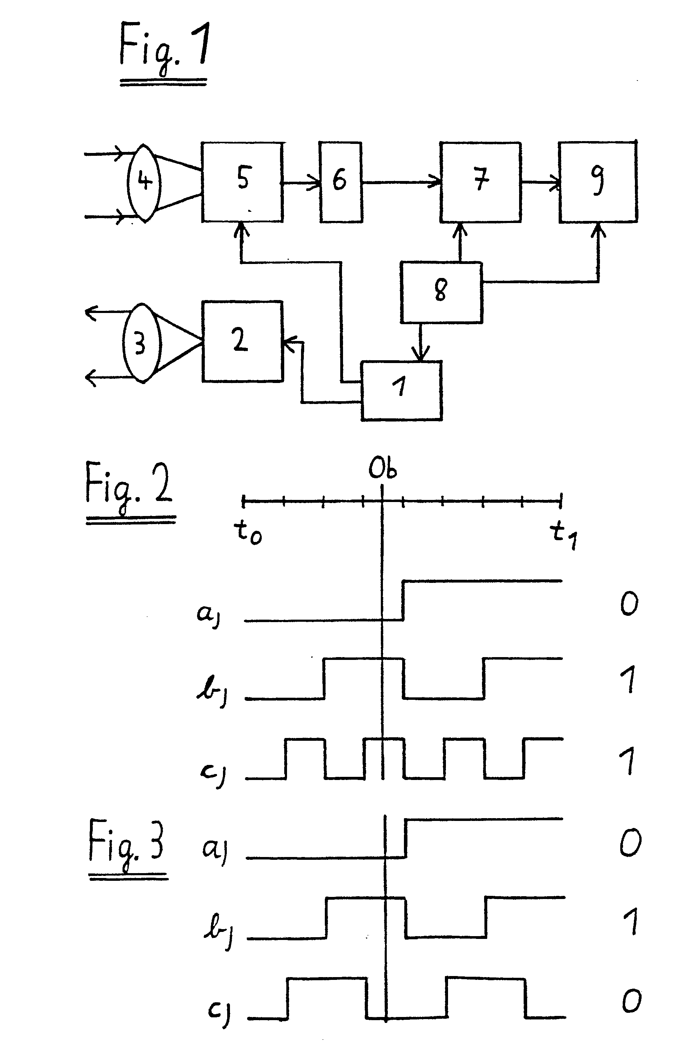

Figur 1 zeigt eine Ausführungsform einer Vorrichtung bestehend aus
a) einer Vorrichtung zum Aussenden kurzer Lichtpulse mit einem Pulsgenerator 1, einem Laser 2 und einer Aufweitoptik 3,
b) einer Vorrichtung zum Empfangen der reflektierten Pulse mit Empfangsoptik 4, elektrooptischem Verschluss 5, Bildverstärker 6 und TV-Kamera 7,
c) einer Steuerungseinheit 8 und
d) einer Verarbeitungseinheit 9.

Die Steuerungseinheit 8 sorgt für eine feste Beziehung zwischen Laserpuls und Öffnungszeit des Verschlusses 5 und stellt so den entsprechenden Entfernungsbereich ein. Verschluss 5 und Laser 2 werden hier von einem Pulsgenerator 1 versorgt.

Figur 2 zeigt als Beispiel eine Binärcodierung eines Entfernungsbereichs nach dem zweiten Auswerteverfahren. Der Entfernungsbereich wird hier durch die Bereiche der Laufzeiten zwischen $t_0$ und $t_1$ dargestellt. Die gewünschte Auflösung sei 1/8. In dem Bildpunkt dieses Beispiels liege ein Objekt Ob im vierten Achtel. Zeile a zeigt den Rechteckimpuls, der den Verschluss 5 der Aufnahmeeinheit beim ersten Bild öffnet (hoch) oder geschlossen hält (unten). Das Objekt Ob wird nicht abgebildet. Das Bild erhält den Digitalwert 0. Zeile b zeigt den Rechteckimpuls, der den Verschluss beim zweiten Bild öffnet oder geschlossen hält. Das Objekt wird abgebildet, das Bild erhält den Digitalwert 1.

Zeile c zeigt den Rechteckimpuls, der den Verschluss für das dritte Bild bedient. Das Objekt wird ebenfalls abgebildet; das Bild erhält den Digitalwert 1. Die daraus zusammengesetzte Binärzahl 011 gibt eindeutig an, dass das Objekt im vierten Achtel des Bereichs liegt (011 ist die binäre Darstellung der Zahl 3, der vierten Zahl der mit 0 beginnenden Zahlenreihe).

Figur 3 zeigt eine der Figur 2 entsprechende Binärcodierung, jedoch mit dem Vorteil, dass die gleiche Auflösung (1/8) mit einem trägeren Verschluss realisiert werden kann. Die Zeilen a und b zeigen identisch die Öffnungszeiten des Verschlusses 5 für das erste und zweite Bild. In Zeile c ist die Verschlusszeit des dritten Bildes gezeigt. Die Frequenz ist gegenüber dem zweiten Bild nicht gesteigert, lediglich wird die Phase verschoben. Dem Objektpunkt wird jetzt die Zahl 010 zugeordnet. Dies gibt ebenfalls eindeutig an, dass das Objekt Ob im vierten Achtel liegt.

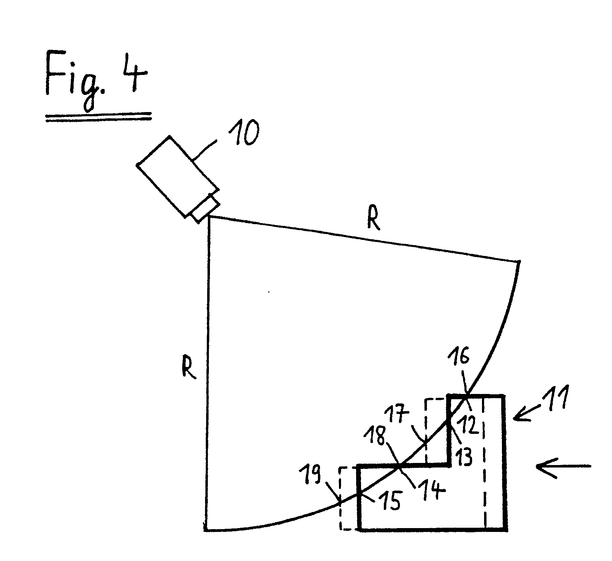

Figur 4 zeigt ein Auswerteverfahren für ein bewegtes Objekt 11, das sich in Pfeilrichtung unter der Kamera 10 wegbewegt. Der Sendepuls und der elektrooptische Verschluss der Kamera 10 sind nun so aufeinander synchronisiert, dass nur dann das Target der Kamera 10 belichtet wird, wenn ein Objekt (hier 11) näher als im Abstand R vor der Kamera 10 liegt. Reflexionen, die einer Entfernung r > R entsprechen, werden durch den bereits geschlossenen Verschluss blockiert. An den Reflexionsstellen 12, 13, 14, 15, die gerade der Entfernung r = R entsprechen, entstehen Übergänge von hellen (belichteten) Stellen zu dunklen (unbelichteten) Bereichen. Diese Übergänge entsprechen dem Entfernungswert R. Bewegt sich das Objekt 11 in die vorgegebene Richtung (unterbrochene Linien), so werden die neuen Reflexionsstellen 16, 17, 18, 19 vermessen.

## Ansprüche

1. Verfahren zur Erzeugung von Entfernungsbildern, also solchen, deren Bildpunkte den jeweiligen Entfernungen der Objektpunkte entsprechen, aus Einzelbildern je eines bestimmten Laufzeitbereiches mit einer Vorrichtung, die kurze Lichtimpulse aussendet und die reflektierten Impulse empfängt und verarbeitet, wobei Einzelbilder von Laufzeitbereichen aufgenommen werden, jedes der Einzelbilder kodiert und aus den kodierten Bildern ein Entfernungsbild erstellt wird, **dadurch gekennzeichnet, daß**
   a) Einzelbilder aufeinanderfolgender Laufzeitbereiche aufgenommen und zwischengespeichert werden,
   b) jedes der Einzelbilder mit einem anderen der gemessenen Entfernung entsprechenden Grauwert codiert wird und
   c) alle codierten Einzelbilder zu einem Graustufenentfernungsbild addiert werden.

2. Verfahren zur Erzeugung von Entfernungsbildern, also solchen, deren Bildpunkte den jeweiligen Entfernungen der Objektpunkte entsprechen, aus Einzelbildern je eines bestimmten Laufzeitbereiches mit einer Vorrichtung, die kurze Lichtimpulse aussendet und die reflektierten Impulse empfängt und verarbeitet, wobei Einzelbilder von Laufzeitbereichen durch Ansteuerung eines Verschlusses aufgenommen werden, jedes der Einzelbilder kodiert und aus den kodierten Bildern ein Entfernungsbild erstellt wird, **dadurch gekennzeichnet, daß**
   a) die Verschlußzeiten des Empfangsteils der Vorrichtung durch Rechteckfunktionen so gesteuert werden, daß die Entfernungen der Einzelbilder in Binärwerten kodiert werden,
   b) Einzelbilder eines oder verschiedener Laufzeitbereiche aufgenommen und zwischengespeichert werden,
   c) die Einzelbilder mit Hilfe einer Schwellwertschaltung als Binärbilder digitalisiert werden und
   d) alle Binärbilder digital addiert werden.

3. Verfahren zur Erzeugung von Entfernungsbildern, also solchen, deren Bildpunkte den jeweiligen Entfernungen der Objektpunkte entsprechen, aus Einzelbildern je eines bestimmten Laufzeitbereiches mit einer Vorrichtung, die kurze Lichtimpulse aussendet und die reflektierten Impulse empfängt und verarbeitet, wobei Einzelbilder von Laufzeitbereichen aufgenommen werden, jedes der Einzelbilder kodiert und aus den kodierten Bildern ein Entfernungsbild erstellt wird, **dadurch gekennzeichnet, daß**
   a) Einzelbilder verschiedener Laufzeitbereiche aufgenommen und zwischengespeichert werden,
   b) den vorhandenen, eine bestimmte Schwelle überschreitenden Bildpunkten jedes Einzelbildes die gleiche Helligkeit zugeordnet wird und
   c) alle Einzelbilder durch Mehrfachbelegung eines Speichers zu einem Graustufenbild addiert werden.

## Claims

1. Method of producing range-coded images, i.e. images the image points of which correspond to the respective distances of the object points, from individual images each of a given travel time range with a device which emits short light pulses and receives and processes the reflected pulses, wherein individual images are received by travel time ranges, each individual image is coded and a range-coded image is generated from the coded images, characterised in that
   a) individual images of successive travel time ranges are received and temporarily stored,
   b) each of the individual images is coded by another grey value which corresponds to the measured distance, and
   c) all coded individual images are added up to one grey scale range-coded image.

2. Method of producing range-coded images, i.e. images the image points of which correspond to the respective distances of the object points, from individual images each of a given travel time range with a device which emits short light pulses and receives and processes the reflected pulses, wherein individual images of travel time ranges are received by means of triggering a shutter, each of the individual images is coded and a range-coded image is generated from the coded images, characterised in that

    a) the shutter periods of the receiving part of the device are controlled by square wave functions in such a way that the distances of the individual images are coded in binary values,

    b) individual images of one or different travel time ranges are received and temporarily stored,

    c) the individual images are digitised as binary images by means of a threshold value switch, and

    d) all binary images are digitally added.

3. Method of producing range-coded images, i.e. images the image points of which correspond to the respective distances of the object points, from individual images each of a given travel time range with a device which emits short light pulses and receives and processes the reflected pulses, wherein individual images are received by travel time ranges, each of the individual images is coded and a range-coded image is drawn up from the coded images, characterised in that

    a) individual images of different travel time ranges are received and temporarily stored,

    b) the available image points of each individual image which exceed a given threshold are assigned the same brightness, and

    c) all individual images are added up to a grey scale image by multi-usage of a memory.

**Revendications**

1. Procédé pour la production d'images codées en distance, c'est-à-dire d'images dont les points correspondent aux distances respectives des points objet, à partir d'images individuelles de respectivement une plage de temps de propagation déterminée, au moyen d'un dispositif qui émet de brèves impulsions lumineuses et reçoit et traite les impulsions réfléchies, des images individuelles de plages de temps de propagation étant enregistrées, chacune des images individuelles étant codée et une image codée en distance étant réalisée à partir des images codées, **caractérisé en ce que**

    a) des images individuelles de plages de temps de propagation successives sont enregistrées et mémorisées temporairement,

    b) chacune des images individuelles est codée avec une autre valeur de gris correspondant à la distance mesurée, et que toutes les images individuelles codées sont additionnées en une image de valeurs de gris codée en distance.

2. Procédé pour la production d'images codées n distance c'est-à-dire d'images dont les points correspondent aux distances respectives des points objet, à partir d'images individuelles de respectivement une plage de temps de propagation déterminée, au moyen d'un dispositif qui émet de brèves impulsions lumineuses et reçoit et traite les impulsions réfléchies, des images individuelles de plages de temps de propagation étant enregistrées par la commande d'un obturateur, chacune des images individuelles étant codée et une image codée en distance étant réalisée à partir des images codées, **caractérisé en ce que**

    a) les temps d'obturation de l'élément de réception du dispositif sont commandés par des fonctions rectangulaires de telle façon que les distances des images individuelles sont codées en valeurs binaires,

    b) les images individuelles d'une ou de différentes plages de temps de propagation sont enregistrées et mémorisées temporairement,

    c) les images individuelles sont numérisées à l'aide d'un circuit à seuil, et que

    d) toutes les images binaires sont additionnées de manière numérique.

3. Procédé pour la production d'images codées en distance c'est-à-dire d'images dont les points correspondent aux distances respectives des points objet, à partir d'images individuelles de respectivement une plage de temps de propagation déterminée, au moyen d'un dispositif qui émet de brèves impulsions lumineuses et reçoit et traite les impulsions réfléchies, des images individuelles de plages de temps de propagation étant enregistrées, chacune des images individuelles étant codée et une image codée en distance étant réalisée à partir des images codées, **caractérisé en ce que**

    a) des images individuelles de différentes plages de temps de propagation sont enregistrées et mémorisées temporairement,

    b) la même luminosité est associée aux points d'image existant de chaque image individuelle qui dépassent un seuil déterminé, et que

    c) toutes les images individuelles sont additionnées en une image de valeurs de gris par occupation multiple d'une mémoire.

## Fig.1

## Fig.2

## Fig.3

Fig. 4